# EUROPÄISCHE PATENTSCHRIFT

(11) **EP 1 659 868 B1**
(45) Veröffentlichungstag und Bekanntmachung des Hinweises auf die Patenterteilung: **07.01.2009**
(21) Anmeldenummer: 04764377.0
(22) Anmeldetag: 23.08.2004
(51) Int. Cl.: A22C 13/00

(54) **EIGENSTABILE RAFFRAUPE**
INTRINSICALLY STABLE SHIRRED STICK
BOYAU CONTRACTE A STABILITE PROPRE

(30) Priorität: 27.08.2003 DE 10339802
(43) Veröffentlichungstag der Anmeldung: 31.05.2006
(73) Patentinhaber: Kalle GmbH, 65203 Wiesbaden (DE)
(72) Erfinder: NIEDERSTÄTTER, Walter, 65343 Eltville (DE); GROLIG, Gerhard, 64546 Mörfelden-Walldorf (DE); AUF DER HEIDE, Dirk, 49594 Alfhausen (DE); AUF DER HEIDE, Christian, 49080 Osnabrück (DE); STALBERG, Stefanie, 65232 Taunusstein-Wehen (DE)
(74) Vertreter: Plate, Jürgen
(86) Internationale Anmeldenummer: PCT/EP2004/009396
(87) Internationale Veröffentlichungsnummer: WO 2005/020694

(56) Entgegenhaltungen:
- EP-A- 0 589 431
- EP-A- 0 640 289
- US-A- 4 888 223
- US-A- 5 928 738
- US-A1- 2002 039 611
- US-B1- 6 194 040

## Beschreibung

Die Erfindung betrifft ein verfahren zur Herstellung einer eigenstabil gerafften, schlauchförmigen Nahrungsmittelhülle.

Nahrungsmittelhüllen, speziell Wursthüllen, werden überwiegend in geraffter Form angeboten. Dabei sind jeweils etwa 10 bis 200 m der Hülle zu einer 5 bis 200 cm langen sogenannten Raupe gerafft. Das Raffen von Kunstdarm ist seit langem bekannt und zahlreich beschrieben. Im industriellen Maßstab erfolgt das Raffen mit speziellen Maschinen. Die als Rollenware angelieferte Hülle wird dabei von der Rolle abgezogen, aufgeblasen und auf den Raffdorn der Raffmaschine gezogen. Der Außendurchmesser des Raffdorns bestimmt dabei den Innendurchmesser der zu erzeugenden Raupe. Das Raffen stellt eine hohe Belastung für die Hülle dar. So führt ein zu hohes Raffverhältnis häufig zu einer Beschädigung der Hülle. Um die Hülle geschmeidiger zu machen und die mechanische Reibbeanspruchung der Raffsysteme zu verringern, wird sie daher üblicherweise unmittelbar vor dem Raffen oder während des Raffens von innen, von außen oder von beiden Seiten mit Wasser, Öl oder einer Öl-in-Wasser-Emulsion besprüht oder benetzt. Durch diese Maßnahme wird weiter verhindert, daß sich an den beim Raffen bildenden Falten Risse oder Vorschädigungen einstellen. Überwiegend werden die so hergestellten Nahrungsmittelhüllen nach dem Raffprozeß mit einer Netz- oder Stützverpackung versehen, damit sie für die weiteren Verarbeitungsverfahren handhabbar sind.

Auf diese Weise geraffte Nahrungsmittelhüllen auf Basis von Cellulose sind bereits seit langem bekannt. Sie lassen sich auch so raffen, daß eigenstabile Raupen entstehen, die für eine vollautomatische Weiterverarbeitung geeignet sind (DE-A 100 09 979). Die Hüllen werden insbesondere als Schäldarm eingesetzt, beispielsweise bei der Herstellung von Würstchen. Cellulosedärme werden stets in feuchtem Zustand gerafft. Nach dem Abziehen der Raupe von der Raffstange liegt eine formstabile oder selbsttragende Raffraupe vor.

bekannt sind auch Raffraupen aus schlauchförmigen Nahrungsmittelhüllen auf Polymerbasis. Diese Raffraupen sind jedoch allgemein ohne Netz- oder Stützverpackung wenig stabil (s. G. Effenberger, Wursthüllen - Kunstdarm, 2. Aufl. [1991] S. 58 - 60). Um die Formstabilität dieser Raffraupen gewährleisten zu können, werden diese Nahrungsmittelhüllen nach dem Aufraffprozeß mit einer Stützverpackung versehen. Die unterschiedlichen Ausführungsformen können z. B. Raffhülsen, Schlauch oder Netzverpackungen beinhalten. Für den Transport werden die Raffraupen mit oder ohne Raffhülse in der Regel mit einem Beutel oder einem schlauchförmigen Netz umgeben. Die Raff-Falten der Hüllen auf Polymerbasis zeigen eine relativ hohe Rückstellkraft, was dazu führt, daß die Raffraupen ohne Stützverpackung ihre ursprüngliche Form nicht behalten, sondern sich wieder ausdehnen. Dadurch nimmt die mechanische Eigenstabilität der Hüllen jedoch stark ab, so daß sie nicht mehr auf vollautomatischen Füllvorrichtungen verwendet werden können. Vielfach wurde der auf eine Hülse geraffte Darm daher mit Hilfe von Begrenzungsscheiben fixiert. Die bisher bekannten Raffraupen, zumindest die ohne Raffhülse, müssen daher entweder von Hand geöffnet oder zumindest von Hand auf das Füllrohr geschoben werden und von der jeweiligen Stützverpackung dann wieder befreit werden, was einen vollautomatischen Betrieb unmöglich macht.

Aus der DE-A 196 25 094 A1 (US-A 5 928 738) ist eine biaxial streckorientierte und thermofixierte, ein- oder mehrschichtige, raupenförmige Verpackungshülle auf Polyamidbasis bekannt, die eine Raffdichte von bis zu 1:200 bei einer Länge der gerafften Raupe von 40 bis 100 cm aufweist, sowie ein Verfahren zur Herstellung einer solchen Verpackungshülle. Die Wanddicke der Verpackungshülle liegt dabei in einem Bereich von 10 bis 50 µm. Vor dem Raffen dieser Verpackungshülle wird eine Sprühlösung aufgetragen, die als Raffgleitmittel einen Emulgator, Paraffinöl oder ein ähnlich wirksames Mittel enthält.

Raffraupen mit einem Kompressionsverhältnis von bis zu etwa 150 aus einer mindestens dreischichtigen schlauchförmigen Hülle sind in der EP-A 1 013 173 offenbart. Die Hülle weist auf der Innen- und Außenseite jeweils eine Polyamidschicht auf. Zwischen diesen Schichten befindet sich eine wasserdampfsperrende Schicht, beispielsweise auf Basis von Polyolefin. Die Hüllen werden vor dem Raffen auf der Außenseite mit Wasser besprüht, das zusätzlich ein Fungizid oder Konservierungsmittel enthalten kann, und dann in einer wasserdampfdichten Verpackung gelagert, so daß das Wasser in die außenliegende Polyamidschicht einziehen kann. Es ist die Vorbefeuchtung, die das Raffen mit dem genannten hohen Kompressionsverhältnis erlaubt.

In der älteren, jedoch nicht vorveröffentlichten Anmeldung EP-A 1 338 204 ist eine Verpackungshülle offenbart, die mit einem Raffverhältnis von 1 : 200 oder höher gerafft ist. Erreicht wird das hohe Raffverhältnis dadurch, daß die Oberfläche der Hülle und die der Raffstange zusammen eine mittlere Rauhigkeit von 0,5 bis 5,0 µm aufweisen. Dadurch wird erreicht, daß sich die Raffraupe ohne Beschädigungen von der Raffstange abziehen läßt. Vorzugsweise wird auch hier die Hülle vor dem Raffen mit einer Lösung besprüht, die ein Raffgleitmittel umfaßt.

In den vorgenannten Schriften sind Raffraupen mit hohen Komprimierungsraten beschrieben. Aufgrund der noch vorhandenen Rückstellkräfte der Raff-Falten sind die Raffraupen jedoch nicht eigenstabil und werden deshalb üblicherweise mit einer Stützverpackung versehen.

Es bestand deshalb nach wie vor die Aufgabe, eine Raffraupe aus einer schlauchförmigen Nahrungsmittelhülle auf Polymerbasis zur Verfügung zu stellen, die ohne zusätzliche Stützverpackung der bisher bekannten Raupen auskommt und sich problemlos auf vollautomatischen Füllvorrichtungen weiterverarbeiten läßt. Die Raffraupe soll - ohne Raffhülse oder eine sonstige Unterstützung - so weit stabil sein und eine weitgehend gerade Form behalten, daß sie aus einem Transportbehälter entnommen und z. B. in den Vorratsbehälter (Trichter) der Füllmaschine gegeben werden kann, worin die Raupe vollautomatisch dem Füllrohr zugeführt wird.

Es wurde gefunden, daß sich auch schlauchförmige"Hüllen auf Basis von synthetischen Polymeren zu eigenstabilen Raupen raffen lassen, wenn sie durch Komprimierung des Raffvorgangs in der Raff-Faltenlegung eine ausreichende Knickbeanspruchung erfahren, die sich nicht zurückstellt. Überraschenderweise hat sich gezeigt, daß auch dickwandige Hüllen mit unelastischer Charakteristik diese Eigenstabilität entwickeln, wenn sie im komprimierten Zustand eine Zeitlang (bis zu 24 Stunden) fixiert werden. Diese Fixierung kann beispielsweise Ober eine Stützverpackung oder eine Lagerung unter Vacuum in einer eng anliegenden, luftdichten Folienverpackung durchgeführt werden. In dieser Zeit bildet sich durch die Fixierung der Raff,Falten die Spannung oder die Rückstellkraft vollständig wieder zurück. Ebenfalls überraschend ist der Abbau dieser Rückstellkraft bei besonders dünnen und weichen oder elastischien Materialien zeitgleich mit der Komprimierung in den heute üblichen und angewandten Raffprozessen. Außerdem hat sich gezeigt, daß eine besonders hohe Unempfindlichkeit gegenüber der Biege- und Knickbeanspruchung durch eine gezielte Raff-Faltenlegung erreicht werden kann. Hierbei ist die Kontakt- und Reiloflächenvergrößerung der Raff-Falten untereinander von besonderer Bedeutung. Diese Kontaktflächenvergrößerung kann insbesondere über eine überlappende Raffung erzielt werden, wie sie mit einem Schneckenraffverfahren in idealer Weise erreicht wird. Außerdem hat sich gezeigt, daß die Eigenstabilität der Raffraupe durch eine haftungssteigernde Behandlung oder Imprägnierung der Hüllenoberfläche noch weiter vergrößert werden kann, bespielsweise durch einen Öl- oder Wasserfilm. Erreichen läßt sich das auch durch eine Coronabehandlung. In den Raffraupen zeigt die Hülle nur noch sehr geringe oder gar keine Rückstellkräfte mehr, so daß sich die beim Raffen gebildeten Falten nicht wieder öffnen. Die Raff-Falten behalten vielmehr ihre einmal erreichte Form bei.

Gegenstand der vorliegenden Erfindung ist denngemäß ein Verfahren zur Herstellung einer eigenstabil gerafften, schlauchförmigen, ein- oder mehrschichtigen Nahrungsmittelhülle, die im wesentlichen aus synthetischen Polymeren besteht und ohne Netz oder Stützverpackung genügend Eigenstabilität aufweist, um auf vollautomatischen Füllmaschinen verarbeitet zu werden. Es umfaßt das
- Bereitstellen einer im wesentlichen aus synthetischen Polymeren bestehenden ein- oder mehrschichtigen Hülle und
- Raffen der Hülle, wobei sie in einem Verhältnis von 100 : 1 oder mehr komprimiert wird,
und ist gekennzeichnet durch das Abbauen der Rückstellkräfte der gerafften Hülle, so daß sie sich nach dem Raffen um nicht mehr als 15 % in Längsrichtung ausdehnt, wenn sie auf einer glatten, ebenen Unterlage bei Raumtemperatur und 60 % relativer Luftfeuchte ohne Umverpackung gelagert wird, wobei a) die Hülle beim Raffen so stark komprimiert wird, daß die Raff-Falten eine Knickbeanspruchung erfahren, die ausreicht, die Rückstellkraft abzubauen, oder b) der Abbau der Rückstellkräfte durch Fixieren Ober eine Stützverpackung oder durch eine Lagerung unter Vakuum in einer eng anliegenden, luftdichten Folienverpackung erfolgt, oder c) die geraffte Hülle durch eine zeitlich begrenzte Fixierung und den daraus resultierenden Spannungsabbau der Raff-Falten die geforderte Eigenstabilität erreicht.

In einer bevorzugten Ausführungsform liegt der Sigma-5-Wert (längs/quer, naß gemessen) unter 20/20 N/mm², besonders bevorzugt im Bereich von 2/2 bis 10/10 N/mm².

Die geringen Rückstellkräfte bzw, das Fehlen von Rückstellkräften ist daran erkennbar, daß sich die Hülle nach dem Raffen um nicht mehr als 15 %, bevorzugt um nicht mehr als 10 %, besonders bevorzugt um nicht mehr als 5 % in Längsrichtung ausdehnt, wenn sie auf einer glatten, ebenen Unterlage, z.B. auf einer Glasplatte, ohne Netz- oder Folienumverparkung oder Ähnliches bei Raumtemperatur (d,h. 23 °C) und 60 % relativer Luftfeuchte (r.F.) gelagert wird.

Die mechanische Stabilität der nach dem erfindungsgemäßen Verfahren hergestellten Raffraupe zeigt sich beispielsweise darin, daß sie unter dem Einfluß ihres Eigengewichts um nicht mehr als 20 %, bevorzugt um nicht mehr als 5 %. bezogen auf die Länge zwischen zwei Unterstützungspunkten, durchbiegt (Lagerung bei Raumtemperatur und 60 % r.F.). Eine entsprechend lange Raupe, die auf zwei Unterstützungspunkten lagert, die 30 cm auseinander liegen, biegt sich demnach unter den genannten Bedingungen um nicht mehr als 6 cm, bevorzugt um nicht mehr als 1,5 cm durch. Eine derart stabile Raffraupe entspricht den Bedingungen für eine vollautomatische Verarbeitung.

Die Hülle ist bevorzugt einschichtig. Sie weist allgemein eine Wandstärke von nicht mehr als 90 µm, besonders bevorzugt von 15 bis 30 µm, auf. Die Hülle wird allgemein in einem Verhältnis von 100 : 1 oder mehr gerafft, d.h. beispielsweise 50 m der Hülle ergeben eine Raffraupe von höchstens 50 cm Länge (= Kompressionsverhältnis von mindestens 100 : 1). Bevorzugt ist das Kompressionsverhältnis sogar noch höher, etwa im Bereich von 120 : 1 bis 500 : 1. Verfahren und Vorrichtungen, mit dienen sich Raffraupen mit einem so hohen Kompressionsverhältnis herstellen lassen, sind beispielsweise in der nicht vorveröffentlichten EP-A 1 338 204 offenbart.

Wesentlicher Bestandteil der Hülle sind bevorzugt "weiche" synthetische Polymere oder Polymermischungen. Dazu gehören aliphatische Polyamide und aliphatische Copolyamide, wie PA 6/66 (erhältlich beispielsweise unter der Bezeichnung ®Ultramid C4 von der BASF AG) oder PA 6/12 (erhältlich beispielsweise unter den Bezeichnungen ®Grilon CF6S oder ®Grilon BM 13 von Erns Chemie AG), Polyether-block-amlde (z.B, ®Grilon FE 7012 oder ®Pebax MH 1657 der Elf Atochem S.A.). In Kombination mit anderen Polymeren kann die Hülle auch wasserlösliche Polymere, wie Polyvinylpyrrolidon oder teil- oder vollverseiftes Polyvinylacetat enthalten. Auch Ionomere, wie Ethylenl(Meth)acrylsäure-Copolymere oder (Meth)acrylsäureester-Polymere (speziell Ethylen/ Methylacrylat-Copolymere, Ethylen/Ethylacrylat-Copolymere oder Ethylen/Butylacrylat-Copolymere) sind geeignet. Weitere geeignete Polymere für die Hülle sind Polyurethane (z, B. ®Irogran VP 456140), Copolyester (z. B. ®Amitel PM 381 bzw. PM 581) und bioabbaubare Polyester (z. B. ®Ecoflex).

Alternativ oder zusätzlich kann die geforderte weiche Qualität der Hülle auch durch den Zusatz monomerer Plastifizierungsmittel erreicht werden. Das sind beispielsweise Dimethylsulfoxid (DMSO), Butan-1,3-diol, Glycerin, Wasser, Ethylenglykol, Propylenglykol, Butylenglykol, Diglycerid, Diglykolether, Formamid, N-Methyl-formamid, N,N-Dimethyl-formamid (DMF), N,N-Dimethyl-hamstoff, N,N-Dimethyl-acetamid, Polyalkylenoxid, Glycerinmono-, dir oder -triacetat, Sorbit, Erythrit, Mannit, Gluconsäure, Galacturonsäure, Glucarsäure, Glucuronsäure, Polyhydroxycarbonsäuren, Glucose, Fructose, Saccharose, Citronensäure und Citronensäure-Derivate sowie beliebige Mischungen davon. Einige der genannten Plastifizierungsmittel können auch auf die bereits fertige Nahrungsmittelhülle aufgebracht werden. Beispielsweise kann die Hülle durch ein wäßriges Weichmacherbad geführt werden, das Glycerin enthält.

In einer besonderen Ausführungsform wird die Haftung der einzelnen Raff-Falten untereinander beispielsweise durch eine Coronabehandlung erhöht. Die Oberflächenspannung beträgt nach dieser Behandlung zweckmäßig 40 bis 50 mN/m, bevorzugt 50 bis 70 mN/m.

Die Hülle hat bevorzugt ein Nennkaliber von nicht mehr als 40 mm. Sie ist damit insbesondere für die Verwendung als Schäldarm geeignet. Es können aber auch Polymorhüllen mit einem größeren Kaliber zu eigenstabilen Raupen verarbeitet werden.

Die Wasserdampfdurchlässigkeit der Hülle wird wesentlich bestimmt durch Art und Anteil der verwendeten synthetischen Polymeren. Allgemein liegt die Wasserdampfdurchlässigkeit bei 5 bis 1000 g/m² d, bevorzugt bei 20 bis 400 g/m² d, besonders bevorzugt bei 50 bis 200 g/m² d, bestimmt gemäß DIN 53 122 bei 23 °C.

Zweckmäßig ist die geraffte Nahrungsmittelhülles auf einer Seite verschlossen, beispielsweise mit einem Metall- oder Kunststoff-Clip. Das einseitige Verschließen kann auch durch Abdrehen der Hülle an sich oder durch Verschweißen oder Verkleben erfolgen.

Raffmaschinen und -vorrichtungen zur Herstellung der erfindungsgemäß eigenstabil gerafften Hülle sind bekannt und beispielsweise in der oben genannten EP-A 1 338 204 beschrieben. Die Rafforgane bilden beispielsweise ein Spiral-, Axial-oder Schneckensystem. Sie führen zur Bildung von Raff-Falten, die im wesentlichen senkrecht zur Maschinenrichtung ausgerichtet sind oder von solchen, die schräg stehen und einander weitgehend überlappen. Raffraupen mit der letztgenannten Faltenstruktur sind allgemein bevorzugt. Sie lassen sich besonders günstig mit einem Schneckensystem herstellen.

Gegebenenfalls wird vor dem Raffen oderwährend des Raffens ein Raffgleitmittel auf die schlauchförmige Hülle aufgebracht. Zweckmäßig wird dieses Mittel auf die Innenseite und/oder auf die Außenseite aufgesprüht Ein besonders geeignetes Raffgleitmittel ist beispielsweise Paraffinöl. Je nach Art der Hülle kann es auch in Form einer Öl-in-Wasser-Ernuision angewendet werden. Auf die Innenseite der Hülle kann auch eine Imprägnierung aufgebracht werden, die die Bräthaftung gezielt steuert und z. B. die Schälbarkeit der Hülle verbessert.

Mit einer zeitlich begrenzten Fixierung der Raffgeometrie und dem daraus resultierenden Spannungsabbau der Raff-Falten wird die geforderte Eigenstabilität der Raupe erreicht.

Das nachfolgende Beispiel dient zur Illustration der Erfindung.

### Beispiel

Eine einschichtige, welche, räucherbare Polymerhülle aus 20 Gew.-% Polyether block-amid, 20 Gew.-% Polyvinylalkohol und 60 Gew-% PA 6/66 mit einem σ_{S} - Wert von 2 / 2 N/mm² (längs/quer) und einer Wasserdampfdurchlässigkeit von 200 g/m² d (bestimmt gemäß DIN 53122 bei 23°C; Feuchtegefälle 85 % / 0 % r. F.) wurde auf einem Umroller mit Wasser vorbefeuchtet. Jeweils 24,4 m der Hülle wurden dann auf einer Raffmaschine mit Axialraffsystem zu einer eigenstabilen Raupe von 17,5 cm Länge gerafft. Während des Raffvorgangs wurde die Außenseite der Hülle mit Paraffinöl besprüht. Auf die In nenseite wurde eine Imprägnierung zur Verbesserung der Schäleigenschaften aufgesprüht (über einen mit Sprühdüsen ausgerüsteten Raffdorn). Mehrere der Raupen wurden mit einem automatischen Packsystem in einen Beutel verpackt und unter Vakuum verschweißt.

Die Raupen wurden dann aus dem Beutel entnommen und in den Zuführtrichter einer schnelllaufenden Füllmaschine (Frank-A-Matic) eingefüllt, von wo sie vollautomatisch dem Füllrohr zugeführt wurden. Auf diese Weise konnte bis zu 2 Tonnen Brät pro Stunde zu Würstchen mit einem Kaliber von 24 mm verarbeitet werden. Anschließend wurden die Würstchen, wie üblich, geräuchert und gegart. Nach dem Abkühlen wurde die Hülle auf einer automatisch arbeitenden Anlage abgeschält; die nun hüllenlosen Würstchen wurden dann in Gläser gefüllt und verschlossen.

Eine gleich lange (17,5 cm) Raupe aus einem Schäldarm auf Cellulosebasis umfaßt dagegen allgemein nur 12,19 m an schlauchförmiger Hülle. Mit der erfindungsgemäßen Raffraupe konnte die Füllleistung daher um 25 % gesteigert werden.

Außerdem betrifft die Erfindung die Verwendung der gerafften Nahrungsmittelhülle auf einer vollautomatischen Füllvorrichtung, bevorzugt auf vollautomatischen Wurstfüll-, Portionier-, Clip- und Abdreh-Vorrichtungen.

## Patentansprüche

1. Verfahren zur Herstellung einer eigenstabil gerafften, schlauchförmigen, ein- oder mehrschichtigen Nahrungsmittelhülle, umfassend
- Bereitstellen einer im wesentlichen aus synthetischen Polymeren bestehenden ein- oder mehrschichtigen Hülle und
- Raffen der Hülle, wobei sie in einem Verhältnis von 100 : 1 oder mehr komprimiert wird,
**gekennzeichnet durch**
Abbauen der Rückstellkräfte der gerafften Hülle, so daß sie sich nach dem Raffen um nicht mehr als 15 % in Längsrichtung ausdehnt, wenn sie auf einer glatten, ebenen Unterlage bei Raumtemperatur und 60 % relativer Luftfeuchte ohne Umverpackung gelagert wird, wobei
a) die Hülle beim Raffen so stark komprimiert wird, daß die Raff-Falten eine Knickbeanspruchung erfahren, die ausreicht, die Rückstellkraft abzubauen, oder b) der Abbau der Rückstellkräfte durch Fixieren über eine Stützverpackung oder **durch** eine Lagerung unter Vakuum in einer eng anliegenden, luftdichten Folienverpackung erfolgt, oder c) die geraffte Hülle **durch** eine zeitlich begrenzte Fixierung und den daraus resultierenden Spannungsabbau der Raff-Falten die geforderte Eigenstabilität erreicht.

2. Verfahren gemäß Anspruch 1, **dadurch gekennzeichnet, daß** die Hülse in einem Verhältnis von 120 : 1 bis 500; 1 komprimiert wird.

3. Verfahren gemäß Anspruch 1, **Dadurch gekennzeichnet, daß** die Fixierung bis zu 24 Stunden lang dauert.

4. Verfahren gemäß einem oder mehreren der Ansprüche 1 bis 3, **dadurch gekennzeichnet, daß** eine Hülle mit einem Sigma-5-Wert (längs/quer, naß gemessen) von weniger als 20/20 N/mm², bevorzugt einen Sigma-5 -Wert im Bereich von 2/2 bis 10/10 N/mm², eingesetzt wird.

5. Verfahren gemäß einem oder mehreren der Ansprüche 1 bis 4, **dadurch gekennzeichnet, daß** sich die Hülle unter dem Einfluß ihres Eigengewichts um nicht mehr als 20 %, bevorzugt um nicht mehr als 5 %, bezogen auf die Länge zwischen zwei Unterstützungspunkten, bei Raumtemperatur durchbiegt.

6. Verfahren gemäß einem oder mehreren der Ansprüche 1 bis 5, **dadurch gekennzeichnet, daß** eine Hülle mit einer Wandstärke von nicht mehr als 90 µm, bevorzugt von 15 bis 30 µm, eingesetzt wird.

7. Verfahren gemäß einem oder mehreren der Ansprüche 1 bis 6, **dadurch gekennzeichnet, daß** die Hülle weiche synthetische Polymere oder Polymermischungen, bevorzugt aliphatische Polyamide oder aliphatische Copolyamide oder Polyether-block-amide, enthält.

8. Verfahren gemäß einem oder mehreren der Ansprüche 1 bis 7, **dadurch gekennzeichnet, daß** die Hülle mit mindestens einem monomeren Plastifierungsmittel weichgemacht ist, bevorzugt mit Dimethylsulfoxid, Butan-1,3-diol, Glycerin, Wasser, Ethylenglykol, Propylenglykol, Butylen-glykol, Diglycerid, Diglykolether, Formamid, N-Methyl-formamid, N,N-Dimethyl-formamid, N,N-Dimethyl-harnstoff, N,N-Dimethyl-acetamid, Polyalkylenoxid, Glycerinmono-, di- oder -triacetat, Sorbit, Erythrit, Mannit, Gluconsäure, Galacturonsäure. Glucarsäure, Glucuronsäure, Polyhydroxycarbonsäuren, Glucose, Fructose, Saccharose, Citronensäure oder einem Citronensäure-Derivat oder einer beliebigen Mischung davon.

9. Verfahren gemäß einem oder mehreren der Ansprüche 1 bis 8, **dadurch gekennzeichnet, daß** eine Hülle mit einem Nennkaliber von nicht mehr als 40 mm eingesetzt wird,

10. Verfahren gemäß einem oder mehreren der Ansprüche 1 bis 9, **dadurch gekennzeichnet, daß** die Hülle eine Wasserdampfdurchlässigkeit von 5 bis 1000 g/m² d, bevorzugt 20 bis 400 g/m² d, besonders bevorzugt 50 bis 200 g/m² d, bestimmt gemäß DIN 53 122 bei 23 °C, aufweist.

11. Verfahren gemäß einem oder mehreren der Ansprüche 1 bis 10, **dadurch gekennzeichnet, daß** die Hülle durchlässig ist für Kalt-, Warm- oder Heißrauch.

12. Verfahren gemäß einem oder mehreren der Ansprüche 1 bis 11, **dadurch gekennzeichnet, daß** die Hülle auf der Außenseite coronabehandelt ist.

13. Verfahren gemäß einem oder mehreren der Ansprüche 1 bis 12, **dadurch gekennzeichnet, daß** die Hülle einseitig verschlossen wird, bevorzugt durch Abdrehen, Verschweißen. Vergeben oder mit einem Metall- oder Kunststoff-Clip.

14. Verwendung der nach dem Verfahren gemäß einem oder mehreren der Ansprüche 1 bis 13 hergestellten gerafften Hülle auf einer vollautomatischen Füllvorrichtung, bevorzugt auf vollautomatischen Wurstfüll-, Portionier-, Clip- und Abdreh-Vorrichtungen.

## Claims

1. A process for preparing an intrinsically stable shirred tubular single-layer or multilayer food casing, comprising
- providing a single-layer or multilayer casing consisting essentially of synthetic polymers and
- shirring the casing to compress it in a ratio of 100:1 or more,
**characterized by**
- reducing the resilience of the shirred casing so that the casing, after shirring, expands in the longitudinal direction by no more than 15% when stored on a smooth, planar support, without secondary packaging, at room temperature and 60% relative humidity, where
a) the casing is compressed during shirring to such an extent that the shirring pleats experience a folding stress which is sufficient to reduce the resilience, or
b) the resilience is reduced by setting via a reinforcing packaging or storage under vacuum in a close-fitting, air-tight film packaging, or c) the shirred casing attains the required intrinsic stability through a time-limited setting and the resulting tension reduction of the shirring pleats.

2. The process as claimed in claim 1, wherein the casing is compressed in a ratio of 120:1 to 500:1.

3. The process as claimed in claim 1, wherein the setting lasts up to 24 hours.

4. The process as claimed in one or more of claims 1 to 3, wherein a casing having a sigma-5 value (longitudinal/transverse, measured wet) of less than 20/20 N/mm², preferably a sigma- 5 value in the range from 2/2 to 10/10 N/mm², is used.

5. The process as claimed in one or more of claims 1 to 4, wherein the casing bends under the effect of its own weight by no more than 20 %, preferably by no more than 5 %, based on the length between two support points, at room temperature.

6. The process as claimed in one or more of claims 1 to 5, wherein a casing having a wall thickness of no more than 90 µm, preferably from 15 to 30 µm, is used.

7. The process as claimed in one or more of claims 1 to 6, wherein the casing contains soft synthetic polymers or polymer mixtures, preferably aliphatic polyamides, or aliphatic copolyamides, or polyether block amides.

8. The process as claimed in one or more of claims 1 to 7, wherein the casing is plasticized by at least one monomeric plasticizer, preferably by dimethylsulfoxide, butane-1,3-diol, glycerol, water, ethylene glycol, propylene glycol, butylene glycol, diglyceride, diglycol ether, formamide, N-methylformamide, N,N-dimethylformamide, N,N-dimethylurea, N,N-dimethylacetamide, polyalkylene oxide, glycerol mono-, di- or triacetate, sorbitol, erythritol, mannitol, gluconic acid, galacturonic acid, glucaric acid, glucuronic acid, polyhydroxycarboxylic acids, glucose, fructose, sucrose, citric acid or a citric acid derivative, or any desired mixture thereof.

9. The process as claimed in one or more of claims 1 to 8, wherein a casing having a nominal caliber of no more than 40 mm is used.

10. The process as claimed in one or more of claims 1 to 9, wherein the casing has a water vapor permeability of 5 to 1000 g/m² d, preferably 20 to 400 g/m² d, particularly preferably 50 to 200 g/m² d, determined as specified in DIN 53 122 at 23 °C.

11. The process as claimed in one or more of claims 1 to 10, wherein the casing is permeable to cold smoke, warm smoke, or hot smoke.

12. The process as claimed in one or more of claims 1 to 11, wherein the casing is corona-treated on the outside.

13. The process as claimed in one or more of claims 1 to 12, wherein the casing is closed at one end, preferably by twisting, welding, gluing or by a metal or plastic clip.

14. The use of the shirred casing prepared by the process as claimed in one or more of claims 1 to 13 on a fully automatic stuffing apparatus, preferably on fully automatic sausage stuffing, portioning, clipping and twisting apparatuses.

## Revendications

1. Procédé de fabrication d'une gaine pour produit alimentaire contractée à stabilité propre, en forme de boyau, à une ou plusieurs couches, comprenant les étapes consistant à :
- préparer une gaine à une ou plusieurs couches sensiblement constituée de polymères synthétiques et
- contracter la gaine, celle-ci étant comprimée dans un rapport égal ou supérieur à 100 :1,
**caractérisé en ce que**
- l'on réduit les forces de rappel de la gaine contractée de sorte qu'elle se détende après contraction de pas plus de 15 % dans la direction longitudinale, lorsqu'elle est stockée sur une base lisse et plane à température ambiante et une humidité relative de l'air de 60 % sans réemballage, dans lequel
a) la gaine est contractée lors de la contraction de manière assez forte pour que les plis de contraction subissent une contrainte de flambage qui suffise à réduire les forces de rappel, ou
b) la réduction des forces de rappel s'effectue par fixation sur un emballage de soutien ou par stockage sous vide dans un emballage en film étanche à l'air étroitement appliqué, ou c) la gaine contractée atteint la stabilité propre requise par une fixation limitée dans le temps et par la réduction de tension des plis de contraction qui en résulte.

2. Procédé selon la revendication 1, **caractérisé en ce que** la gaine est contractée dans un rapport de 120:1 à 500:1.

3. Procédé selon la revendication 1, **caractérisé en ce que** la fixation dure jusqu'à 24 heures.

4. Procédé selon une ou plusieurs des revendications 1 à 3, **caractérisé en ce que** l'on utilise une gaine ayant une valeur sigma 5 (longitudinale/- transversale, mesurée à l'état humide) de moins de 20/20 N/mm², de préférence une valeur sigma 5 dans la plage de 2/2 à 10/10 N/mm².

5. Procédé selon une ou plusieurs des revendications 1 à 4, **caractérisé en ce que** la gaine fléchit à température ambiante sous l'effet de son propre poids de pas plus de 20 %, de préférence de pas plus de 5 %, par rapport à la longueur entre deux points d'appui.

6. Procédé selon une ou plusieurs des revendications 1 à 5, **caractérisé en ce que** l'on utilise une gaine ayant une épaisseur de paroi de pas plus de 90 µm, de préférence de 15 à 30 µm.

7. Procédé selon une ou plusieurs des revendications 1 à 6, **caractérisé en ce que** la gaine contient des polymères ou des mélanges de polymères synthétiques souples, de préférence des polyamides aliphatiques ou des copolyamides aliphatiques ou des polyétheramides séquencés.

8. Procédé selon une ou plusieurs des revendications 1 à 7, **caractérisé en ce que** la gaine est plastifiée avec au moins un plastifiant monomère, de préférence avec du sulfoxyde de diméthyle, du butane-1,3-diol, de la glycérine, de l'eau, de l'éthylèneglycol, du propylèneglycol, du butylène-glycol, un diglycéride, du diglycoléther, du formamide, du N-méthylformamide, du N,N-diméthyl-formamide, de la N,N-diméthylurée, du N,N-diméthylacétamide, du poly(oxyde d'alkylène), des mono-, di- ou triacétates de glycérine, du sorbitol, de l'érythritol, du mannitol, de l'acide gluconique, de l'acide galacturonique, de l'acide glucarique, de l'acide glucuronique, des acides polyhydroxycarboxyliques, du glucose, du fructose, du saccharose, de l'acide citrique ou un dérivé d'acide citrique ou un quelconque de leurs mélanges.

9. Procédé selon une ou plusieurs des revendications 1 à 8, **caractérisé en ce que** l'on utilise une gaine d'un calibre nominal de pas plus de 40 mm.

10. Procédé selon une ou plusieurs des revendications 1 à 9, **caractérisé en ce que** la gaine présente une perméabilité à la vapeur d'eau de 5 à 1000 g/m² d, de préférence de 20 à 400 g/m² d, mieux encore de 50 à 200 g/m² d, déterminée selon la norme DIN 53122 à 23 °C.

11. Procédé selon une ou plusieurs des revendications 1 à 10, **caractérisé en ce que** la gaine est perméable à la fumée froide, chaude ou brûlante.

12. Procédé selon une ou plusieurs des revendications 1 à 11, **caractérisé en ce que** la gaine est soumise à un traitement corona sur la face externe.

13. Procédé selon une ou plusieurs revendications 1 à 12, **caractérisé en ce que** la gaine est fermée d'un côté, de préférence par torsion, soudage, collage ou par une agrafe en métal ou en plastique.

14. Utilisation de la gaine contractée fabriquée selon une ou plusieurs des revendications 1 à 13 sur un dispositif de remplissage totalement automatique, de préférence sur des dispositifs complètement automatiques de remplissage de saucisses, de portionnement, d'agrafage et de torsion.
